(19) Europäisches Patentamt
European Patent Office
Office européen des brevets

(11) EP 4 340 424 A1

(12) EUROPEAN PATENT APPLICATION

(43) Date of publication:
20.03.2024 Bulletin 2024/12

(51) International Patent Classification (IPC):
H04W 12/122 $^{(2021.01)}$   H04W 12/106 $^{(2021.01)}$
H04L 9/40 $^{(2022.01)}$

(21) Application number: 22195563.6

(22) Date of filing: 14.09.2022

(52) Cooperative Patent Classification (CPC):
H04L 63/1466; H04L 63/1416; H04L 63/1425;
H04W 12/106; H04W 12/122

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Koninklijke Philips N.V.
5656 AG Eindhoven (NL)

(72) Inventor: GARCIA MORCHON, Oscar
Eindhoven (NL)

(74) Representative: Philips Intellectual Property &
Standards
High Tech Campus 52
5656 AG Eindhoven (NL)

(54) **AN APPARATUS FOR INCREASING AN INTEGRITY OF SIGNALS IN A SIGNALING NETWORK**

(57) The invention relates to an apparatus (Rx) for increasing an integrity of signals (S) in a signaling network, each signal comprising a sequence of one or more signal elements. The apparatus comprises an identification unit configured to identify any injection (I) of signal elements into a received signal based on at least one of a) a signal element magnitude variation and b) an inversion of a permutation operation applied to the received signal upon transmission. This allows for a reliable identification of injections of signal elements that are due to the capture effect. In particular, not only overshadow attacks, but also undershadow attacks or other injection attacks can be identified. By processing the received signals based on any identified injections of signal elements, the integrity of signals in the network can be increased.

FIG. 4

EP 4 340 424 A1

**Description**

FIELD OF THE INVENTION

The invention relates to an apparatus, a system, a method and a computer program for increasing an integrity of signals in a signaling network.

BACKGROUND OF THE INVENTION

If a transmitter transmits an original signal and a third party transmitter transmits a stronger interfering signal, a receiver receiving the combination of the two signals can, after demodulation, or decoding, end up with only the interfering signal. This is due to the capture effect, according which, whenever a combination of signals is received, only the strongest of the combined signals will actually be selected for demodulation or decoding. If the third party intentionally transmits, or "injects", a stronger interfering signal, this is known as an overshadow attack. Overshadow attacks can arise in various wireless communication networks, such as LTE, 5G, WiFi, etc., as well as in wired communication networks, including optical fiber-based networks. These attacks and other injection attacks can also arise in wired or wireless sensing networks, e.g., in wireless sensing networks based on radar signals. In wireless sensing networks, wireless sensing signals are transmitted and received upon reflection on surrounding objects. Moreover, also integrated sensing and communication (ISAC) networks might be subject to overshadow and other injection attacks.

A variant of overshadow attacks goes by the name of undershadow attacks. In this variant, the capture effect is exploited as in overshadow attacks, but the interfering signal coincides with the original signal only at distinct signal elements. Undershadow attacks can be more difficult to detect than overshadow attacks.

With injection attacks like the overshadow and undershadow attacks being known, there is a need to increase an integrity of signals in a signaling network.

SUMMARY OF THE INVENTION

It is an object of the invention to increase an integrity of signals in a signaling network. An apparatus for increasing an integrity of signals in a signaling network is presented, wherein each signal comprises a sequence of one or more signal elements. The apparatus comprises an identification unit configured to identify any injection of signal elements into a received signal based on at least one of a) a signal element magnitude variation and b) an inversion of a permutation operation applied to the received signal upon transmission.

Since, in order to be successfully injected into an attacked signal by an attacking party, a signal element needs to have a relatively high magnitude, a variation in signal element magnitude has been found to be a good basis for identifying any injection of signal elements into a received signal and thereby increasing the integrity of signals in the signaling network. Moreover, it has been realized that signal element injections rely on a supposed order of the signals to be attacked. This supposed order can be made reliably detectable by applying a permutation operation to a signal upon transmission and inverting the permutation operation once the signal has been received. Hence, it has been found that also in this way the integrity of signals in the signaling network can be increased. In particular, it has been found that not only overshadow, but also undershadow attacks can be identified based on either or a combination of a) a signal element magnitude variation and b) an inversion of a permutation operation applied to the received signal upon transmission.

The signaling network may comprise one or more nodes acting as transmitters and/or receivers for the signals whose integrity is to be increased. Exemplary signaling networks include communication networks, sensing networks and integrated sensing and communication networks. A signal may, particularly in communication and integrated sensing and communication networks, be understood as corresponding to a message communicated in the network. For instance, the signal may transport the message, in which case the signal may be understood as an information carrier and the message may be understood as the information carried. Signals in a signaling network may be considered as being exchanged, i.e. exchanged between the one or more nodes of the network. However, a signal may also be transmitted and received by one and the same node. This may particularly be the case in sensing networks and integrated sensing and communication networks. When referring herein to a signal in the signaling network, or simply in "the" network, it shall be understood that a signal exchanged or otherwise sent via, i.e. propagating in, the network is meant.

The signal elements can refer to symbols of the signal, for instance, wherein a bit is understood herein as a particular case of a symbol. The sequence of signal elements in a signal could also be referred to as a sequence of slots in the signal and respective signal contents in the slots. The sequence of signal elements is not necessarily a temporal sequence, but can also be, for instance, a sequence in a spectral domain. In other words, the slots of a signal may be individualized, i.e. separated from each other, in time and/or frequency, for instance.

The signal element magnitude may, for instance, be indicative of an energy of the signal element. In particular, the signal element magnitude may refer to an energy of the signal element. More generally, however, the signal element magnitude can be any quantity that could be considered a magnitude of the signal element. For instance, the signal element magnitude could be a strength, a polarization, an intensity or a power of the signal element. Exemplary quantities of the aforementioned kinds that are frequently used in practice in related applications are, e.g., a received signal strength indicator (RSSI) and a signal-to-noise ratio (SNR).

The apparatus may comprise a measurement unit configured to measure the signal element magnitude for each of the signal elements of a received signal. The signal element magnitude variation may then be detected in the measured signal element magnitudes.

The signal element magnitude variation can be a variation in signal element magnitudes across signals and/or within signals. That is to say, the signal element magnitude variation can be a variation in signal element magnitudes of corresponding signal elements in different received signals and/or a magnitude variation in the sequence of signal elements of a single signal.

The identification unit, which could also be referred to as an identifier, may be configured to only detect a signal element magnitude variation, or consider it significant, if the variation exceeds a predetermined threshold. For instance, a uniform distribution may be assumed for the signal element magnitudes across signals and/or within signals, wherein a signal element injection may be identified based on any significant deviation away from the uniform distribution. The presence of a significant deviation may be determined based on a p-test, i.e. a statistical test leading to a p-value, for instance.

The identification unit may also rely on an artificial intelligence (AI) model, particularly a machine-learning (ML) model, to detect an attack. That is to say, the identification unit may be configured to identify any injection of signal elements into the received signal based on a trained AI or ML model, wherein the model has been trained to receive signals as input and to provide a corresponding output that is indicative of any signal element injections in the respective signal received as input. The ML/AI model may be configured, such as by having been trained accordingly, to identify any injection of signal elements into a signal in terms of a signal element magnitude variation.

The ML/AI model might have been centrally trained and deployed to the receivers of the network so that it can be used for inference, i.e., to infer whether a signal is subject to an overshadowing or undershadowing attack. The ML/AI model might also be trained locally based on the locally received and decoded/demodulated signals. The ML/AI model may be based on supervised learning or unsupervised learning. The ML/AI model might also be distributed, e.g., such as in a federated learning approach.

The injections of signal elements to be identified may particularly have been carried out on the received signal by a third party after transmission of the received signal. While an injection of signal elements throughout a whole signal would correspond to an overshadow attack, an undershadow attack would correspond to an injection of signal elements at only selected positions of the signal. Identifying an injection of a signal element into the received signal can particularly include locating the injected signal element in the received signal. An injected signal element can be located in the received signal by detecting where in the sequence of signal elements of the received signal the signal element magnitude varies, i.e., for instance, beyond a predetermined degree.

The apparatus may be configured to discard, or drop, a received signal if any injected signal element has been identified in the received signal. Additionally or alternatively, the apparatus may be configured to trigger an alarm upon detection of any signal element injections. On the other hand, it may be preferred that the apparatus further comprises a processing unit, or "processor", configured to process the received signal. In particular, the processing unit may be configured to process a received signal based on any identified injections of signal elements. As will be further detailed below, this allows to correct the received signals for signal element injections.

More generally, which action is to be taken upon identifying an injection of one or more signal elements may be determined in a policy configured by a managing entity such as a base station or a network function in a core network. For instance, the policy may determine that, when detecting an attack, an alarm should be issued by receivers of a network to a base station or management entity of the network. Likewise, however, any signal processing implemented as a countermeasure against attacks, particular any signal correction, may also be carried out by the processing unit independent of any identified signal element injection. Accordingly, said policy may determine that either a predefined fraction of the received signals, only the received signals which have been identified as comprising injected signal elements, i.e. as having been attacked, or all received signals shall be subject to a predefined correction procedure.

Any of the measurement unit, the identification unit and the processing unit may preferably be included in a receiver of the network. Hence, the apparatus may particularly be or comprise a receiver. However, the apparatus could also be separate from a receiver, wherein then the receiver may forward any received signals to the apparatus. Moreover, the measurement unit, the identification unit and the processing unit could also be distributed across the network, for instance, in which case the apparatus could be understood as a distributed apparatus or system.

It shall be understood that the terms "receiver" and "transmitter" may just refer to different functions of one and the same device, which may be referred to as a "transceiver", wherein the device may carry out the functions of "receiving" and "transmitting" at different times. However, with respect to certain services of the network, or predefined signal types, there may be a fixed assignment between a) receiving functions and transmitting functions and b) devices in the network. This also means that the apparatus might serve a receiving function with respect to some services of the network or with respect to some of the signals, but a transmitting function with respect to others.

Optionally, a configuration of or for the apparatus, which could also be understood as a policy, may be sent to a receiver or a transmitter of the network. For instance, if the apparatus is separate from any receiver or transmitter of the network which is receiving or, respectively, transmitting the signals which are the subject of the configuration of the apparatus, the configuration of the apparatus may be sent to these receivers or transmitters. On the other hand, if the apparatus is or comprises the respective receiver or transmitter, the configuration may be forwarded to other receivers or transmitters in the network, and/or the apparatus may receive its configuration from a managing entity of the network.

As mentioned above, the signal element magnitude variation can be a variation in signal element magnitudes across signals and/or within signals. In particular, for identifying any injection of signal elements into the received signal based on a signal element magnitude variation, the identification unit may be configured to detect the signal element magnitude variation in at least one of a) the sequence of signal elements of the received signal and b) a signal element sequence comprising a signal element of the received signal and one or more corresponding signal elements of previous repetitions of the received signal.

In case the received signal corresponds to a current repetition of a repetitively received signal, the signal element magnitude may particularly refer to an average signal element magnitude computed from the current repetition and a predetermined number of previous repetitions of the received signal. Identifying signal element injections based on average signal element magnitudes can increase the reliability, since random fluctuations in signal element magnitude will less likely cause false positives.

If representing the last N repetitions of a signal S by S[n], S[n-1],...,S[n-N+1], for instance, a set of corresponding average signal element magnitudes A = [A[0], A[1],...,A[L-1]] may be computed, where L is the number of signal elements in S, i.e. each of its repetitions, and A[j] = (1/N)(S[n,j]+S[n-1,j]+...+S[n-N+1,j]), with S[m,j] referring to the j-the signal element in the sequence of signal elements of the m-th repetition of S. Note that N can be any natural number, including 1, wherein in case N = 1 no averages are computed, but only the signal element magnitudes of S[n] are used.

Known examples of repetitively received signals are periodically transmitted signals, such as those forming a master information block (MIB) or a system information block (SIB1). A periodic signal is understood herein as a repetitive signal which is repeated at constant time intervals.

As mentioned above, the uniform distribution assumed for signal element magnitudes in order to identify signal element injections may refer to a uniform distribution within and/or across signals. A uniform distribution within a signal is understood as referring to a uniformity of signal elements of any given signal, but not necessarily of signal elements of different signals. A uniform distribution across signals is understood as referring to a uniformity of corresponding signal elements of different signals, but not necessarily of signal elements of any given signal on its own. A correspondence of signal elements between different signals could refer, for instance, to a correspondence in position in the respective signal.

The concept of an assumed uniform distribution within and/or across signals translates to the above example in which, instead of magnitudes of the signal elements themselves, average signal element magnitudes are used for identifying signal element injections, i.e. attacks. In that case, referring to the above notation, a uniform distribution can be assumed for each of the N averages A[j] for any given j as measured repetitively over time, and/or for the L averages A as measured for a given received signal at any given point in time.

It may be preferred that the identification unit and/or the processing unit are configured to invert a transmission transformation applied to the received signal upon transmission. The transmission transformation, which is to be distinguished from the permutation operation, can correspond, for instance, to a modulation or an encoding, wherein the inverting of the transformation can correspond to a demodulation or a decoding, respectively. Hence, when transmitters in the network transmit signals by modulating or encoding information to be transmitted on a carrier signal, the apparatus may, when acting as or in conjunction with a receiver, demodulate or decode, respectively, the received signals.

The identification unit and/or the processing unit may be configured to apply an inverted transmission transformation on a received signal irrespective of whether the received signal has been identified by the identification unit as comprising injected signal elements. In fact, attacks like the overshadow and the undershadow attack, which exploit the capture effect, rely on transmitters and receivers encoding/modulating and, respectively decoding/demodulating signals. Particularly these kinds of transmission transformations, i.e. those transmission transformations which attacks rely on and which could therefore also be regarded as "ordinary" transmission transformations, may be carried out irrespective of any identified signal element injections. However, as will be described further below, a further, or subsequent, application of transmission transformations and/or their inverses may be beneficial, particularly at the receivers' end, wherein also these further applications of the transmission transformations and/or their inverses may be carried out irrespective of any identified signal element injections.

Furthermore, it may be preferred that the processing of the received signal, i.e. the processing carried out by the processing unit in dependence on or independently of any identified signal element injections, includes scaling the signal elements of the received signal depending on whether they have been identified as injected signal elements. The scaling of the signal elements may refer to a scaling of the respective signal element magnitudes. Moreover, the scaling may be applied after applying an inverted transmission transformation to the received signal, specifically after applying an "ordinary" inverted transmission transformation, or a first inverted transmission transformation. In particular, the processing unit may be configured to duplicate the received signal, apply the inverted transmission transformation to a first of the duplicates, and scale the signal elements of the transformed first duplicate. In this way, an unprocessed version of the received signal is still at hand, namely the second duplicate. Hence, any further processing can use both the processed first duplicate and the unprocessed second duplicate.

Preferentially, the processing of the received signal includes a thresholding of the signal elements into predefined signal element levels, the predefined signal element levels including at least an injection level indicative of an injected signal element magnitude and a non-injection level indicative of a non-injected signal element magnitude, wherein the signal elements are scaled depending on their signal element levels. The processing unit can particularly be configured to apply the thresholding to the respective received signal before applying the "ordinary", or first, inverted transmission transformation and/or before duplicating the received signal. Hence, for instance, the processing unit can be configured to apply the thresholding as an initial processing step. Alternatively, the thresholding might also be applied to the received signal before it is handed over to the processing unit, i.e., for instance, even before reaching the identification unit, or even the measurement unit.

Thresholding of the signal elements may refer to determining into which of a predefined set of magnitude intervals a respective signal element falls and then replacing a magnitude of the signal element by a magnitude level, wherein the magnitude level is representative for the magnitude interval into which the signal element has been determined to fall. The magnitude levels may be predefined as multiples of a minimum signal element magnitude measured for a respective signal. Moreover, the magnitude levels may be normalized with respect to the lowest or highest one among them. In case of a binary thresholding, for instance, i.e. a thresholding into only the injection level and the non-injection level, the signal element magnitude levels for a given signal will then be either 1 or k, wherein k > 1 is a thresholding parameter. The non-injection level is preferably predefined such that it is a lowermost signal element level. Moreover, the non-injection level is preferably predefined such that it corresponds to a magnitude interval into which a magnitude of intact, or non-corrupted, signal elements is expected to fall, while the injection level is preferably predefined such that it corresponds to a magnitude interval into which a signal element magnitude falls by which an attacker is expected to attempt an injection of signal elements. If, for instance, intact signal elements are expected to have a magnitude between I and I+ΔI and all potential injected signal elements are expected to have a magnitude between kI and (k+Δk)I, k > 1, then the magnitude levels of a corresponding (binary) thresholding could be the respective lower interval boundaries, i.e. I and kI, such that, after normalization with respect to the lower one of the two, namely I, the above given example of possible magnitude levels 1 and k, with k >1, for every signal element in the received signal results.

While the thresholding can be extended to signals whose symbols are received with multiple magnitude levels, it may be preferred that the thresholding is a binary thresholding of the signal elements into a lower and an upper signal element level. In case of binary thresholding, the thresholding parameter k may be chosen such that any attacking signal ends up completely at the upper signal element level, while all non-attacked signals end up completely at the lower signal element level.

Preferably, the processing involves forming a difference signal based on an unprocessed version of the received signal, i.e. the second duplicate, and a processed version of the received signal corresponding to the received signal as resulting from the thresholding and scaling, i.e. the first duplicate, wherein the scaling includes scaling the signal elements at the injection level to above a level difference, the level difference being indicative of a difference in magnitude between the injection level and the non-injection level. It has been found that, in this way, a recovery of the uncorrupted signal from the received signal, which may comprise signal elements injected by an attacker, is facilitated.

In particular, when scaling the signal elements at the lower signal element level, or non-injection level, by a factor of a, wherein preferably $0 \leq a < 1$, and the signal elements at the upper signal element level, i.e. injection level, by a factor of b, the factor b may be chosen to satisfy b > k-1. As described above, k may indicate a ratio in signal element magnitude between the injected signal elements and the signal elements from the original signal, more particularly a ratio between a magnitude of the signal elements at the injection level and a magnitude of the signal elements at the non-injection level. Hence, the scaling factor b is chosen to lie above the level difference k - 1, which is in this case a normalized level difference.

The above given condition for the scaling factor b corresponds to the observation that the signal elements of the first duplicate of the received signal are preferably scaled such that, when the scaled first duplicate is subtracted from the second duplicate of the received signal, the signal element magnitudes of the original signal part in the superposition corresponding to the second duplicate are greater than the difference between a) the signal element magnitudes of the injecting/attacking signal part in the superposition corresponding to the second duplicate and b) the scaled signal element magnitudes of the injecting/attacking part of the first duplicate of the received signal.

The processing unit is preferably configured to apply the inverted transmission transformation to the difference signal. If, as indicated above, the inverted transmission transformation is already applied before forming the difference signal, e.g. as an initial processing step, the processing unit is hence configured to apply the inverted transmission transformation twice. By applying the inverted transmission transformation to the difference signal, signal elements that have been replaced by injected signal elements can be recovered, thereby correcting the received signals for injection attacks by third parties, such as undershadowing.

Between applying the inverted transmission transformation to the received signal, i.e. for the first time, and applying the inverted transmission transformation to the difference signal, the processing unit may be configured to apply the non-inverted transmission transformation, i.e. the transmission transformation as applied to the received signal upon transmission. For instance, the first duplicate of the received signal, i.e. the version of the received signal that is processed until forming the difference signal based thereon and on the so far unprocessed version of the received signal, may be processed in the following order: 1) applying the inverted transmission transformation, 2) applying the non-inverted transmission transformation, 3) applying the scaling. An alternative order would be: 1) applying the inverted transmission transformation, 2) applying the scaling, 3) applying the non-inverted transmission transformation. Irrespective of the order, the inverted transmission transformation is preferably applied to the difference signal formed the resulting version of the first duplicate and the second, "saved" duplicate. As mentioned before, the transmission transformation may particularly correspond to a modulation or encoding, such that the inverted transmission transformation may particularly correspond to a demodulation or decoding.

In fact, inverting a transformation on a received signal that has been applied to the signal upon transmission has been found to be useful also for identifying injected signal elements. For this purpose, the transformation can particularly correspond to a permutation of the signal elements in the received signal, since this allows to create a mismatch between a signal element order supposed by an attacker and an actual order of the signal elements temporarily present between transmission and reception. In particular, it may be preferred that, for identifying any injection of signal elements into the received signal based on an inversion of a permutation operation applied to the received signal upon transmission, the identification unit is configured to permute the received signal according to the inverted permutation operation, and to execute an integrity check on the permuted received signal. The integrity check may be a known integrity check, particularly an integrity check known to return a negative result on signals comprising signal elements in an incorrect order, or randomly distributed erroneous signal elements, such as caused by jamming or noise. For instance, the identification unit may be configured to execute a cyclic redundancy check (CRC).

The permutation operation may particularly be a random permutation operation, wherein "randomness" is understood herein as also covering "pseudo-randomness". For instance, a secure pseudo-random sequence of signal elements can be obtained by first determining a random seed and then applying a secure pseudo -random function (e.g., a key derivation function, SHAKE, ...) on it.

Just like the approach of identifying injected signal elements based on a signal element magnitude variation, also the approach of using integrity checks in combination with signal permutations is based in part on the observation that current wireless communication standards such as LTE or 5G lack integrity protection in the lower communication layers. It is currently being studied whether integrity protection might be enabled. For instance, solutions addressing the second key issue (KI#2) referred to in the Technical Report (TR) 33.809 by the 3$^{rd}$ Generation Partnership Project (3GPP), titled "Study on 5G security enhancements against False Base Stations (FBS)", discuss how to protect broadcasted 5G system information. Similarly, integrity protection in unicast messages might be enabled if a Message Integrity Code (MIC) is added to the messages, e.g., messages between a UE and a base station. However, applying integrity protection to each message might be expensive.

Luckily, executing an integrity check on all received signals may not be necessary for identifying injected signal elements with a sufficient probability. Therefore, the identification unit may be configured to execute an integrity check for a predetermined fraction of signals in the network, wherein, for a given signal to be transmitted, it is determined at random based on the predetermined fraction whether the integrity check is to be executed for the signal or not. This can allow for reduced computational efforts. In other words, efficiency can be increased by integrity protecting certain messages only, e.g., a fraction f of the messages, wherein, for instance, f=50% or less. A given message might be chosen (at random) to be integrity protected with probability f and if protected, it includes a digital signature or a message integrity check (MIC), or more generally any integrity check. If the integrity check is included, the receiver has to check the integrity of the received message. If, then, an attacker attempts to manipulate the signal, the attacker will not always be successful, and thus, the attack can be detected. The probability f may correspond to the previously mentioned predetermined fraction. In an example, executing the integrity check may comprise checking whether a signal structure, which may be given in terms of signal elements, complies with a standard structure. The standard structure may correspond to a communication protocol, for instance.

For any signal for which an integrity check is to be executed, an integrity indicating signal part can be transmitted in combination with the signal, wherein the identification unit may be configured to check an integrity of the signal upon reception of the signal based on the integrity indicating signal part. For instance, the transmitted combination of the integrity indicating signal part and the signal is formed by including the integrity indicating signal part in the respective signal, wherein a lack of integrity is concluded upon reception of the signal if it is determined that a magnitude of one or more signal elements of the integrity indicating signal part exceeds a predetermined threshold. The integrity indicating signal part can particularly correspond to a digital signature or an MIC. The signal elements of the integrity indicating signal part may be of the same type as those of the signal itself. Hence, for instance, they may correspond to bits or other symbols.

The integrity indicating signal part can be included in a respective signal by, for instance, appending the integrity indicating signal part at an end of the signal or by inserting the integrity indicating signal part in front of the signal. However, if the integrity check is appended at the end of the message, an attacker might try to overshadow the end of the message. To address this issue, the integrity check may be placed at the beginning of the message, such that, when the integrity check is transmitted, the transmission of the rest of the message is shifted. Alternatively, the integrity check may be appended to the end of the messages, but a negative integrity check result is returned if the energy of the symbols occupied by the integrity check is too high, in particular, too high compared with the rest of the message.

In other words, it may be preferred a) that the transmitted combination of the integrity indicating signal part and the signal is formed by inserting the integrity indicating signal part in front of the signal, or b) that the transmitted combination of the integrity indicating signal part and the signal is formed by appending the integrity indicating signal part at the end of the signal, wherein a lack of integrity is concluded upon reception of the signal if it is determined that a magnitude of one or more signal elements of the integrity indicating signal part exceeds a predetermined threshold.

In fact, it may also be preferred a) that only a predetermined fraction of signals in the network are permuted according to a permutation operation before transmission, wherein, for a given signal to be transmitted, it is determined at random based on the predetermined fraction whether the signal is permuted or not, and/or b) that the transmitted combination of the permutation indicating signal part and the permuted signal is formed by inserting the permutation indicating signal part in front of the permuted signal.

It should be emphasized that any integrity checking of the above described kind can alternatively be implemented independently of whether signals are permuted or not. Already the inclusion of integrity checks in signals by itself may allow to detect more attacks and therefore increase the integrity of signals in a signaling network. This particularly applies to networks working according to wireless communication standards such as LTE or 5G, which, as indicated above, lack integrity protection in the lower communication layers.

So far, the aspect of attack detection by identifying signal element injections and the aspect of processing received signals accordingly in order to increase an integrity of signals in a signaling network have been discussed, wherein it should be emphasized that already these aspects can be implemented individually or in combination.

In a further aspect, it has been realized that, although, for instance, processing any received signal in which an injected signal element has been identified such that it is corrected by recovering the signal elements that have been replaced by the injected signal elements offers an efficient way of increasing the overall integrity of signals in a signaling network subject to third party injection attacks such as undershadowing, these attacks may alternatively be avoided altogether by means of some attack avoidance measures.

As for attack detection, also for attack avoidance at least some of the signals in the network may be, e.g., permuted according to a permutation operation before transmission, wherein the permutation operation may be inverted after receiving the signals. Hence, the processing unit may be configured to invert, for at least some received signals, a permutation operation according to which the signals have been permuted before, or upon, transmission. As long as the permutation operation is not known to the attacker, third-party attacks like the undershadow attack can in this way be prevented. Since a perfect avoidance of attacks may not always be possible, signal correction and attack avoiding measures may be implemented side by side, i.e. both may be implemented in a same network. Moreover, any one or both of the two may be implemented irrespective of whether an attack has previously been detected, such as by identifying a signal element injection in a received signal. Such implementations could be regarded as being of precautionary nature, although perhaps at the cost of additional computational efforts.

Accordingly, the present disclosure also relates to a system for increasing an integrity of signals in a signaling network, each signal comprising a sequence of one or more signal elements, wherein the system comprises a) an apparatus as described above as a receiving device, or receiver, for the signals in the network, and/or b) a transmitting device, or transmitter, for the signals in the network, wherein the transmitting device comprises a permutation unit configured to permute signals to be transmitted according to a permutation operation.

Hence, also an apparatus for increasing an integrity of signals in a signaling network is presented, wherein each signal comprises a sequence of one or more signal elements, and wherein the apparatus does not necessarily comprise means for identifying any injection of signal elements into a received signal based on at least one of a signal element magnitude variation and an inversion of a permutation operation applied to the received signal upon transmission, particularly for any of a) measuring, for each of the signal elements of a received signal, a signal element magnitude, the signal element magnitude being indicative of a signal element energy, b) identifying any injection of signal elements into the received signal by detecting a signal element magnitude variation based on the measured signal element magnitudes, and/or c) processing the received signal based on any identified injections of signal elements, but wherein the apparatus does comprise d) means for permuting, such as a permutation unit, or "permuter", configured to permute, at least some of the signals in the network according to a permutation operation before transmission, wherein the permutation operation may be inverted, such as by the processing unit of a further apparatus in the system, after receiving the signals. If the apparatus only implements option d), it may particularly be a transmitter.

It shall be understood that, while the aspect of correcting received signals for identified attacks may be realized by only a receiver, i.e. a receiving device implementing the initially described apparatus, an attack avoidance by means of, for instance, permuting signals is preferably realized by a transmitter and a receiver in cooperation, i.e. a transmitting device implementing an apparatus realizing above option d), and additionally a receiver, i.e. a receiving device implementing the initially described apparatus.

An attack avoidance measure like, for instance, a permutation of signal elements in signals according to some permutation operation, may not only be initialized by a transmitter, but also by a receiver. In an example, a receiver may request a transmitter to take attack avoidance measures, particularly to start permuting signal elements of signals transmitted by the transmitter to the receiver according to some permutation operation. Such a request may be sent once the receiver has identified an injection of one or more signal elements into a received signal, i.e. once an attack has been detected.

In any case, i.e. whether implemented for the purpose of attack detection or attack avoidance, whether implemented without implementing the same or other measures for the respective other purpose or the purpose of signal correction, et cetera, it may be preferred that, for each permuted signal to be transmitted, the permutation operation is encoded into a permutation indicating signal part, and the permuted signal is transmitted in combination with the permutation indicating signal part, wherein the permuted signals are received in combination with the permutation indicating signal parts and the permutations are inverted after receiving the signals based on the permutation indicating signal parts. The transmitted combination of the permutation indicating signal part and the permuted signal may preferably be formed by a) appending the permutation indicating signal part at the end of the permuted signal, or by b) inserting the permutation indicating signal part in front of the permuted signal.

In another embodiment, the permutation operation might be encoded in certain physical parameters of the signal. For instance, an initiator and a responder, which may correspond to a transmitter and a receiver or vice versa, respectively, can exchange data, in particular a cryptographic key, encoded in phases of a carrier signal. Instead of exchanging a key, the responder might encode a permutation operation used to permute the transmitted data.

In a variant, the permutation operation according to which a first signal to be transmitted is permuted can be encoded into a permutation indicating signal part that is transmitted in combination with a second permuted signal. Also the transmitted combination of the permutation indicating signal part and the second permuted signal may be formed by a) appending the permutation indicating signal part at the end of the second permuted signal, or by b) inserting the permutation indicating signal part in front of the second permuted signal. The second permuted signal may have been permuted according to a permutation operation different from the one according to which the first signal is permuted. The first and the second signal may have any predefined relation with respect to each other. For instance, they may be subsequently transmitted signals, i.e. the second signal may be transmitted directly after the first signal.

In another embodiment, the permutation operation may not be encoded into any signal part transmitted in combination with any permuted signal. Instead, for instance, the permutation operation may be defined depending on one or more communication parameters accessible, or known, by the transmitters and receivers in the network. The communication parameters defining the permutation operation may be understood as global parameters of the network. Preferably, the communication parameters are chosen such that they are difficult, or practically not, to guess by potential attackers.

The above embodiments are specially applicable for signals transmitted by a transmitter (e.g., the transmitter of a base station or access point) before a receiver (e.g., a user equipment) has established a connection with the transmitter. For instance, the signals might be the master information block (MIB) or the system information block SIB 1 initially transmitted by a 5G base station to allow a user equipment to perform the initial random-access procedure in 5G networks. If a connection is already available, the permutation might also be exchanged or agreed upon in a secure way, e.g., by using a secure channel between transmitter and receiver/responder to securely exchange a secret permutation that will be applied to a later exchanged signal. Here, a secure channel might refer to a confidentiality protected channel and/or an integrity protected channel and/or a replay protected channel, etc.

While it may be sufficient to pursue the avoidance strategy in combination with the correction strategy or even in its own right, the extra effort that needs to be taken therefor, even if relatively little, may not be necessary if it is known that there are no ongoing attacks. Hence, it may be beneficial to first identify any injection of signal elements into received signals by detecting, for at least some of the received signals, a signal element magnitude variation, such as based on previously measured signal element magnitudes. In other words, it may be preferred that signals in the network are permuted according to a permutation operation before transmission only if an injected signal element has been identified in a received signal. In particular, the permutation unit may be configured to permute the signals to be transmitted only if an injected signal element has been identified in a received signal based on a signal element magnitude variation.

Subsequently, the permutations can be used to detect attacks yet more accurately.

According to another aspect of the same purpose of increasing an integrity of signals in a signaling network, it has been realized that an attacker might wish to attack a wireless system, e.g., a wireless sensing system. Such a wireless sensing system, which could also be understood as a network, may be based on radar signals. Wireless sensing signals might be attacked by means of an overshadowing or undershadowing attack or by injecting signals. A radar signal might consist of chirps transmitted, e.g., in a periodic manner. A chirp might be a periodic signal of, e.g., increasing or decreasing frequency in time. For instance, a radar signal might be transmitted every Tt seconds and the radar signal itself might have a duration of Ts seconds containing N chirps of duration $Tc = Ts / N$, where during the duration of each chirp the frequency increases linearly between frequency fa and frequency fb. For instance, the transmitted signal have a frequency $fa + (k*t \bmod (fb-fa))$ where fa is the initial frequency, k is the increase speed, t is the time and mod refers to the modulo operation. If an attacker knows the parameters of the radar signal, the attacker can figure out how to inject new signals resembling reflecting radar signals to create a new non-existing object or masking the actual measured features of an object. To address this issue, chirps in the radar signal might follow a permuted "pattern" or "signature" as in previous embodiments. Additionally or alternatively, they might also follow a random looking "pattern", e.g., the N chirps might be of increasing/decreasing frequency type. Hence, additionally or alternatively to permuting the signal elements based on a permutation operation as described above, the signal elements may be modified in the frequency domain in a predetermined, possibly random, manner. Again, it may be preferred that the manner in which the signals are changed, i.e. in this case the modification to the signal elements in the frequency domain, is known to the respective transmitter and the respective receiver, but not any potential attackers. It is also noted again that the term "random" is understood herein as also covering "pseudo-random". As already mentioned further above, a secure pseudo-random sequence of signal elements can be obtained by first determining a random seed and then applying a secure pseudo - random function (e.g., a key derivation function, SHAKE, ...) on it.

The permutation referred to above might be a random permutation applied to a standard wireless sensing signal (e.g., a given well-known pattern of chirps), wherein the permutation may be applied to the wireless sensing signal before transmission. Likewise, the permutation might be a random permutation applied to the standard wireless sensing signal upon reception. Moreover, the permutation operation might only be applied to a fraction of the wireless sensing signals. For instance, a chirp signal might be transmitted as usual a fraction f of the time and using a random permutation a fraction 1-f of the time. This has the advantage of reducing the computational overhead in transmission and reception.

In fact, for increasing an integrity of wireless (sensing) signals in a signaling network, a wireless sensing signal might be featured or identifiable by a "signature" or "pattern" that may be, e.g., (i) a given randomized / permuted arrangement of the chirps as described above and/or (ii) a given modulation (e.g., amplitude, phase, frequency, ...), e.g., of one or multiple chirps. In this second case, the modulation might consist in modulating, e.g., the amplitude (or other feature) of a chirp of duration Tc, e.g., Tc might be divided into M intervals of duration Tc/M, each of them modulated by a different amplitude (or other feature). Another example of this second case is that the frequency might be modulated, e.g., instead of having chirps in which the frequency of each chirp increases linearly between frequency fa and frequency fb, it is feasible to have a chirps whose frequency continuously changes (i.e., without jumps) between fa and fb following a non-constant pattern, but still difficult to guess by an attacker. For instance, the transmitted signal may have a frequency $fa + (k(t)*t \bmod (fb-fa))$ where k(t) refers to the increase speed that might be time variant and not constant, e.g, k(t) might be $k*\sin(fm*t)$ where fm is a frequency that determines the speed of change.

The "signature" or "pattern" may be updated following a given schedule, e.g., every T_up seconds.

In an embodiment, a wireless sensing signal might be featured / identifiable by a "signature" or "pattern" as defined above that is direction-specific, i.e., specific for a specific direction DIR with respect to, e.g., the transmitter. This limits the scope of a potential injection attack since an attacker has to be able to monitor the "signature" or "pattern" included in the wireless sensing signal in a given direction DIR. A malicious attacker injecting fake wireless sensing signals will only succeed if the attacker injects signals from direction DIR and including the proper "signature" or "pattern".

In order to implement any of the above measures, one or more wireless sensing transmitters of the network might be configured to transmit wireless (sensing) signals as described above.

In a further embodiment, if a respective wireless sensing receiver detects an object at a distance d to be the closest one or if the wireless sensing receiver wants to limit the feasible distance for performing attack to d or less (i.e., attackers at a distance >d cannot perform an injection attack), then the wireless sensing receiver can request the wireless sensing transmitter (alternatively, the wireless sensing transmitter may be configured accordingly) to adapt the period of the wireless sensing signal to be at least d/c, in particular, to use a "pattern" or "signature" whose duration is at least d/c.

Also, a wireless (sensing) receiver might receive wireless (sensing) signals as described above and compare (or integrity check) the pattern (e.g. permuted pattern, random pattern, ...) of the received wireless (sensing) signal and the transmitted wireless (sensing) signal, wherein the comparison may require that the received wireless (sensing) signal follows the same "signature" / "pattern" as the transmitted wireless (sensing) signal. Moreover, the comparison (integrity check) step may require, e.g., detecting a signal element magnitude variation and/or an inversion of a (permutation) operation (P) applied to the received signal upon transmission. Besides, the comparison (integrity check) step can be direction-dependent.

In a further embodiment, if an operation (e.g., permutation) is applied to the sensing signal at transmission, the it is required to synchronize the receiver when the sensing signal arrives before applying the inversion of a (permutation) operation. For instance, a wireless sensing system receiving chirps, e.g., FMWC chirps, that have been permuted before transmission, requires a synchronization module capable of detecting a permuted chirp sequence. The synchronization module triggers a detection event when the permuted chirp sequence is detected that trigger a second module in charge of the execution of the inversion of the (permutation) operation on the received signal. This is required because a target might be at any distance, and thus, a reflected wireless sensing signal might arrive at any point of time so that before the operation can be inverted on the sensing signal, first it is required to determine when the inversion operation should start. The synchronization module might detect the signal, e.g., by analyzing the correlation of the received signal and the transmitted permuted sensing signal or a matching filter. When a correlation peak is determined, then an inverse operation can be applied to the received sensing signal that is fed then to the wireless sensing receiver, e.g., a radar receiver.

Note that above synchronization step is also required if not all chirp signals are exactly equal or if some features of the chirps are mixed or varied according to an operation applied to the transmitted sensing signal. Features that might also be varied or mixed might include the slope or speed at which the frequency increases linearly between frequency fa and frequency fb or the distance between chirps.

Note that above synchronization step might not be required in above embodiment in which the "signature" or "pattern" may be a given modulation, thus, this embodiment can lead to a simpler sensing receiver. For instance, in the case of a receiver with a time variable frequency rate, the sensing receiver might need to mix the received signal with the transmitted signal with a variable frequency between fa and fb and modulated according to k(t). When the signals are mixed, then a main peak will appear in the frequency domain at a frequency dependent of the distance while smaller peaks will appear next to it where the specific location is dependent of the modulating frequency in k(t). The sensing receiver can determine the presense of an injected signal by monitoring the correct or incorrect location of those smaller peaks dependent on k(t).

If an operation is applied to the transmitted sensing signal a fraction of the time, then the above pipeline only needs to be executed a fraction of time time reducing the required resources.

In a further embodiment, if an operation is applied to the transmitted sensing signal a fraction of the time, then an attacker might attempt to attack the system when the sensing signal is predictable. Thus, the receiver should verify that the readings r1[n] of the received sensing (radar) signal when the operation is applied to the transmitted sensing signal and the readings r2[n] of the received sensing (radar) signal when the operation is not applied remain consistent, e.g., that no new targets are detected when no operation is applied to the transmitted sensing signal or e.g., the readings r1[n] and r2[n] are equal where n refers to a discrete time n.

In a further embodiment, the fraction of the time in which the transmitted sensing signal is subject to a (permutation) operation is context dependent. If the environment is friendly (e.g., no attackers are detected when comparing the readings of the received sensing (radar) signal when the operation is applied to the transmitted sensing signal and when it is not applied), then the (permutation) operation is applied to a small fraction of the transmitted sensing signal. If the readings show incoherences, then the operation is applied to a higher portion/fraction f of the transmitted sensing signal. This embodiment, provides a trade-off between resource requirements and robustness. In particular, f at time n might depend on the coherence between the readings obtained from the transmitted sensing signals with and without (permutation) operation. For instance, If r1[n-1] == r2[n-1], then f[n] moves towards a low value f0, but if r1[n-1] != r2[n-1], then f[n] moves towards a higher value f1.

Configuration parameters including the usage of a "pattern" or "signature" to limit the injection of fake sensing signals, the timing features, whether the "pattern" or "signature" is direction specific, the update time, etc., can be configured in a wireless sensing transmitter or a wireless sensing receiver by a managing entity such as a core network or a network function in charge of wireless sensing or an (external) application function. It is also noted that the wireless sensing transmitter and/or the wireless sensing receiver might be a base station or a user equipment.

The invention also relates to a method for increasing an integrity of signals in a signaling network, each signal comprising a sequence of one or more signal elements, wherein the method includes identifying any injection of signal elements into a received signal based on at least one of a) a signal element magnitude variation and b) an inversion of a permutation operation applied to the received signal upon transmission. As explained above with respect to the corresponding apparatus, the method may, for instance, include identifying any injection of signal elements into the received signal by detecting a signal element magnitude variation, such as by measuring, for each of the signal elements of a received signal, a signal element magnitude, the signal element magnitude possibly being indicative of a signal element energy, and detecting the signal element magnitude variation based on the measured signal element magnitudes, and possibly processing the received signal based on any identified injections of signal elements. As detailed above, the processing can particularly include a correction of the received signal for a detected attack.

Moreover, the invention relates to a computer program for increasing an integrity of signals in a signaling network, wherein the program comprises instructions causing an apparatus, particularly the first mentioned apparatus above, to execute the above method.

Similarly, a method and a corresponding computer program are provided according to which a) in order to avoid successful attacks, at least some of the signals in the network are modified according to a permutation operation and/or frequency modifying operation before transmission, the respective operation being determined as described above, and/or b) an integrity check is executed for a predetermined fraction of signals in the network, wherein, for a given signal to be transmitted, it is determined at random based on the predetermined fraction whether an integrity check is to be executed for the signal or not, wherein the integrity check can be carried out, and/or be of a type, as further indicated above.

It shall be understood that the apparatus of claim 1, the system of claim 13, the method of claim 14, and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

In the following drawings:

Fig. 1 shows schematically and exemplarily a communication network,
Fig. 2 shows schematically and exemplarily an overshadow attack,
Fig. 3 shows schematically and exemplarily a use of Successive Interference Cancellation against an overshadow attack,
Fig. 4 shows schematically and exemplarily an undershadow attack,
Fig. 5 shows schematically and exemplarily an apparatus for increasing an integrity of signals exchanged in a signaling network,
Fig. 6 shows schematically and exemplarily a processing of a received signal to correct for an undershadow attack,
Fig. 7 shows schematically and exemplarily a processing of a received signal to avoid successful undershadow attacks, and
Fig. 8 shows schematically an exemplary permutation operation applicable to signals to avoid successful undershadow attacks.

DETAILED DESCRIPTION OF EMBODIMENTS

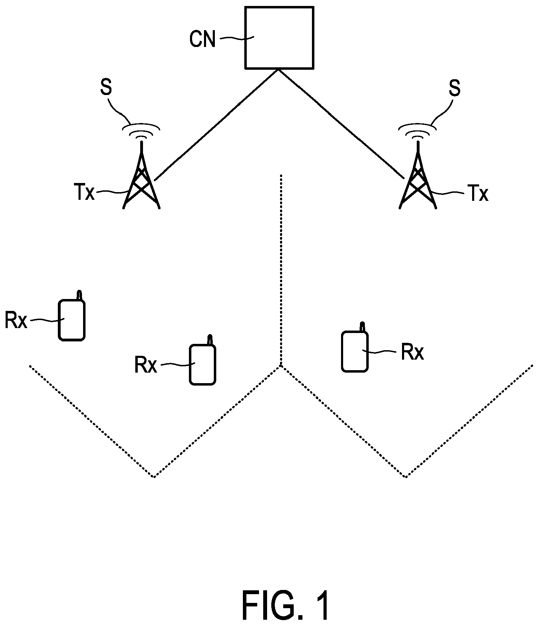

Fig. 1 shows schematically and exemplarily a communication network in which the embodiments disclosed herein can be implemented. The shown exemplarily network is a cellular telecommunication network, as for example a 4G or a 5G network, whose terminals/end devices (referred to in 5G as User Equipment, or UE in short), realize apparatuses according to the embodiments disclosed. In Fig. 1, the terminals/end devices are indicated as receivers Rx, since this is their function with respect to which the subsequent detailed description mainly refers, but it is understood that they also act as transmitters in the network. Likewise, the base stations of the network (also referred to in 5G as gNodeB, or gNB in short) are indicated as transmitters Tx in Fig. 1, since this is their function with respect to which the subsequent detailed description mainly refers, but it is understood that they also act as receivers in the network. For instance, the terminals/end devices can access different types of services including voice and data services through an exchange of signals with the base stations of the network.

Each base station serves and communicates with the terminals/end devices present in a predetermined area, also referred to as a cell. Two adjacent cells are indicated in Fig. 1 by dotted lines. The base stations are connected to a core network CN, which is managed by a network operator, or managing entity, and controls the delivery of services. Each cell is served by one base station, which functions as an interface between the terminals/end devices and the core network 120. When, as indicated by Fig. 1, the plurality of terminals/end devices are mobile devices that may travel from one network cell to another, therefore, the interface used by a given terminal/end device may change over time.

The terminals/end devices may communicate with the base stations on various radio channels, uplink (from the devices to the respective base station) and downlink (from the respective base station to the devices). Other radio channels may exist, for example, among the terminals/end devices (for example, Sidelink channels) and among base stations (e.g. X2 interface), but are not shown in Fig. 1 for the sake of simplicity. Each of the terminals/end devices could carry out its functions along any of its channels. A main interest may, however, lie on the channels connecting it with the respective base station. In particular a downlink channel may be of interest, in which case the terminals/end devices could realize an apparatus according to the present disclosure in the form of a receiver Rx, and the base station could realize a further apparatus according to the present disclosure in the form of a transmitter Tx.

Cellular telecommunication networks will evolve to include wireless sensing capabilities so that the resulting system is capable of both wireless communication and sensing. In such systems, a base station might be capable of transmitting and/or receiving wireless sensing signals. Similarly, terminals/end devices might also be capable of transmitting and/or receiving wireless signals.

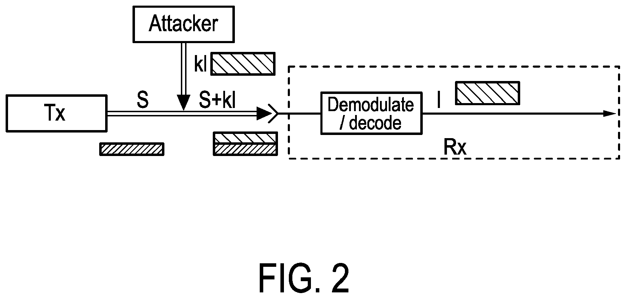

Fig. 2 schematically depicts an overshadow attack where a transmitter Tx sends a message/signal S, and an attacker sends an interfering, stronger signal kI so that a receiver Rx receives the signal S + kI. It is assumed that the interfering signal is stronger than the signal S by a factor of k, wherein k > 1. Hence, a magnitude of S and I is assumed to be the same. Moreover, as is characteristic for an overshadow attack, the interfering signal has the same length as the original signal S, i.e. the same number of signal elements, and it is timed such that it is received by the receiver Rx at the same time as the signal S. The signal S + kI received by the receiver Rx, which is a superposition of the signals S and kI, is illustrated in Fig. 2 such that the signal S appears in front of the signal kI, although in reality no "front" or "back" exists in the superposition.

The signal S in Fig. 2 is a modulated or encoded signal. Hence, as usual for conveying information via signals, the transmitter Tx has applied a transmission transformation in the form of a modulation or encoding operation on a corresponding carrier or base signal. As indicated in Fig. 2, in order to extract the information conveyed via the signal S, the receiver Rx applies a demodulation or encoding operation, respectively, to the received signal, wherein the received signal is in this case the superposition signal S + kI. A receiver receiving and demodulating/decoding the signal S + kI will, because of the higher magnitude of kI as compared to S, generally obtain the signal I due to the capture effect, wherein the obtained signal I corresponds to a demodulated or decoded version of the signal kI transmitted by the attacker, which is leveled down to the magnitude of the signal S transmitted by the transmitter Tx.

An exemplary case of an overshadow attack would be that an attacker attacks broadcast messages sent by an LTE base station acting as a transmitter Tx by modifying them in the air through the injection of a strong signal, which may be denoted as kI as indicated above. As a consequence, any user equipment (UE) devices receiving such broadcast as a receiver Rx are affected, since they will decode a wrong signal. In this case, the overshadow attack might be used to modify certain fields in the LTE or 5G broadcasted messages, in particular in the low signaling layers or during the initial communication, since they are not integrity protected. It has been shown that it is possible to overshadow any downlink traffic in LTE systems. Conversely, an attacker might also attack a base station receiving messages sent by UEs. In this case, a UE might be the transmitter Tx and a base station might be the receiver Rx.

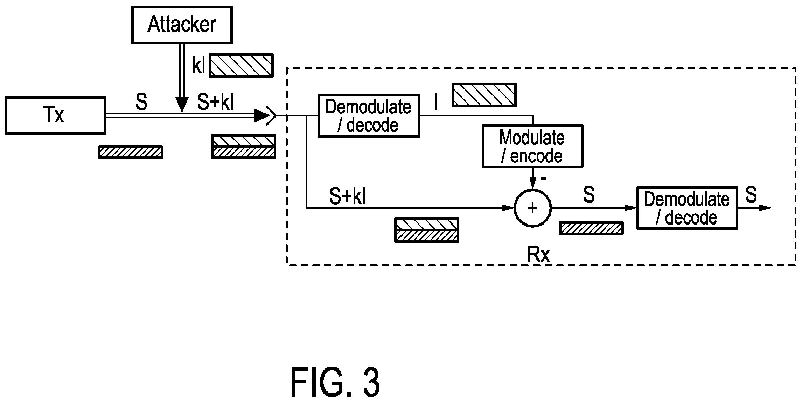

It has been found that a technique known as Successive Interference Cancellation (SIC) can be used to recover signals attacked by overshadow attacks. SIC is the basis for non-orthogonal multiple access that has been discussed to be used in 5G. The original SIC concept is shown in Fig. 3.

Fig. 3 corresponds to Fig. 2 as far as the extraction of the signal I from the superposition signal S + kI is concerned. However, in this case the receiver Rx is configured to modulate or encode, respectively, the signal I again and subtract the resulting signal from the originally received signal S + kI. For instance, as indicated in Fig. 3, two signal processing chains may be formed in the receiver, wherein the signal S + kI may, along a first of the signal processing chains, be demodulated/decoded and thereafter modulated/encoded again, and, along the second of the signal processing chains, be saved before being demodulated/decoded along the first signal processing chain. The two signal processing chains may be joined by subtracting the signal resulting from the first signal processing chain from the signal resulting from the second processing chain, wherein the latter is just the received signal S + kI. The signal resulting from the subtraction is the signal S originally transmitted by the transmitter Tx, i.e. the undisturbed signal. As indicated in Fig. 3, a demodulation or decoding operation can then be applied to this signal in order to extract the information to be conveyed from it.

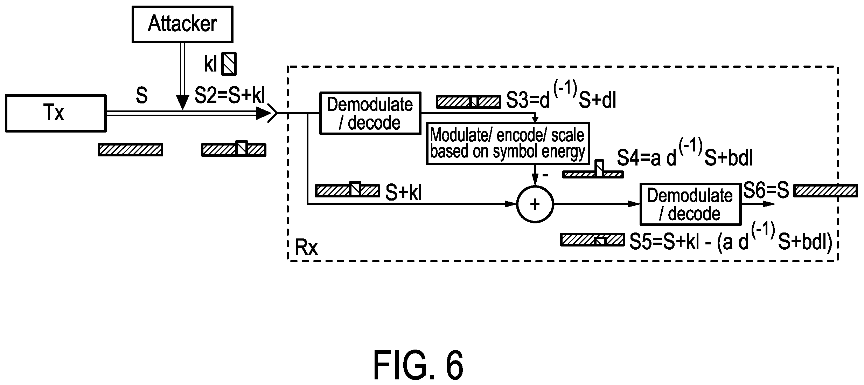

The splitting of the signal processing chain into the first and the second signal processing chain illustrated by Fig. 3 is an example of what has been described further above as a duplicating of the received signal into a first and a second duplicate. Moreover, it is understood that, as indicated in Fig. 3 and correspondingly repeated in Fig. 6, a signal subtraction can be realized by first inverting, i.e. taking the negative version, of the signal to be subtracted, and then adding the signals.

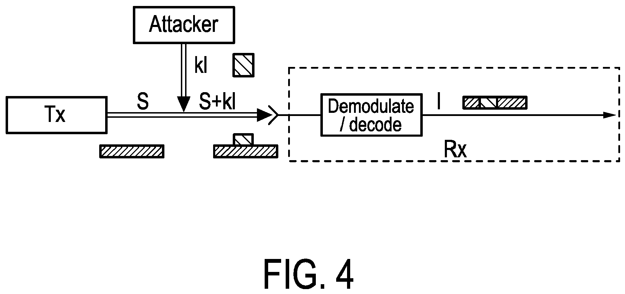

As already mentioned in the beginning, just like overshadow attacks, also undershadow attacks exploit the capture effect, but the interfering signal of an undershadow attack coincides with the original signal only at distinct signal elements. Fig. 4 shows schematically and exemplarily an undershadow attack, wherein it is seen that, in contrast to overshadow attacks, in the case of an undershadow attack the injected signal kI only affects certain bits/symbols of S, i.e. only certain signal elements in the sequence of signal elements amounting to the signal S.

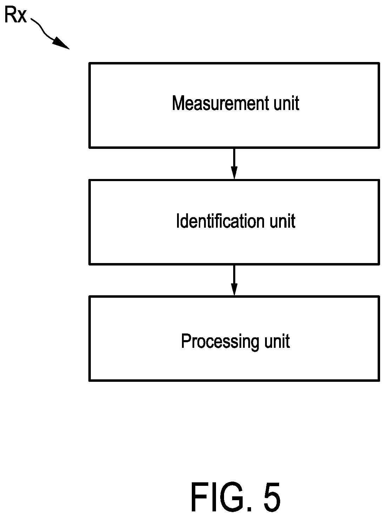

It has been found that undershadow attacks can be more difficult to detect than overshadow attacks since a total energy of the interfering signal can be relatively low, particularly lower than that of the original signal. In contrast to overshadow attacks, corrupted signals can therefore not be distinguished from non-corrupted signals in terms of their total energy. Moreover, SIC as illustrated by Fig. 3 can no longer be successfully applied, since through the subtraction the intact/original signal elements would be lost. It has therefore been proposed to use digital signatures to avoid undershadowing attacks in a master information block (MIB) as used in LTE and/or to modify SIC in order to correct for undershadow attacks. Still, however, there is a need to increase the integrity of signals in networks subject to attacks like the overshadow and, in particular, the undershadow attack. With respect to Figs. 5 to 8, particular embodiments addressing this need will be described. However, it should be noted that already an apparatus processing signals by SIC as described with reference to Fig. 3 in order to correct for identified overshadow attacks can increase the integrity of signals in a signaling network as, for instance, illustrated in Fig. 1. Such an apparatus therefore forms a further embodiment, and could in fact be regarded as a "base" embodiment.

Fig. 5 shows schematically and exemplarily an apparatus for increasing an integrity of signals in a signaling network. While each of the three units may be dispensable in other embodiments, the particular apparatus illustrated, which could be or be part of a receiver of the network, comprises a measurement unit, an identification unit and a processing unit. The measurement unit, which could comprise a sensor, is configured to measure the magnitudes of signal elements of received signals and forward them to, or provide them for access by, the identification unit. The identification unit is configured to identify any injection of signal elements into a received signal based on, in this case, a signal element magnitude variation, i.e. a variation in the signal element magnitudes measured by the measurement unit. The processing unit is configured to process the received signal based on any identified injections of signal elements, i.e. in this case if injected signal elements have been identified by the identification unit and, if so, based on the injected signal elements, such as, for instance, based on their magnitude and/or position in the sequence of signal elements.

Fig. 6 also shows schematically and exemplarily, in the form of a receiver Rx, an apparatus for increasing an integrity of signals in a signaling network, wherein each signal comprises a sequence of one or more signal elements, and wherein the apparatus comprises a processing unit configured to process any received signals. The processing unit, which could also be named processor, is not shown in Fig. 6, but the processing steps effected by the processing unit are. Fig. 6 could be understood as a more contextual illustration of an apparatus of the type shown in Fig. 5, wherein the focus of Fig. 6 is on the processing steps that can be carried out by the processing unit, which can also be understood, and be implemented, independently of the measuring and identification steps carried out by the measurement unit and the identification unit, respectively. While Figs. 5 and 6 show receivers as exemplary apparatuses, instead of being located in a receiver Rx, the processing unit could also be partially or completely located elsewhere, wherein the receiver might then forward received signals, possibly after some initial processing steps including a demodulation or decoding, to the processing unit.

The processing unit is configured to process a received signal based on any identified injections of signal elements. In particular, while the processing steps indicated in Fig. 6 are shown as if they were fixed, i.e. as if they were carried out always and for all received signals, this may not be the case. Instead, the processing unit may be configured to carry out the shown processing steps only upon request, such as upon request by a transmitter Tx or a central managing entity in a core network CN, and/or only if an injection of one or more signal elements in a signal previously sent via the network, particularly a signal previously received by the receiver Rx, has been identified. Moreover, for identifying injections of signal elements, such as due to overshadow or undershadow attacks, the receiver Rx could (although, as already indicated, does not necessarily) comprise, as illustrated by Fig. 5, a measurement unit configured to measure, for each of the signal elements of a received signal, a signal element magnitude, the signal element magnitude being indicative of the signal element energy or a related quantity, and furthermore an identification unit configured to identify any injection of signal elements into the received signal by detecting a signal element magnitude variation based on the measured signal element magnitudes. The signal element magnitudes used as a basis may refer to magnitudes of signal elements within a single received signal or across signals. Hence, for instance, signal element magnitudes of at least one of a) the sequence of signal elements of a given received signal and b) a signal element sequence comprising a signal element of the received signal and one or more corresponding signal elements of previous repetitions of the received signal can be compared to each other to detect a significant magnitude variation. The measurement unit and the identification unit may, although not shown in Figs. 3 and 6, be located in the signal processing chain in front of the elements indicated for the receiver. For instance, the identification unit may be configured to identify the presence of an overshadow attack if all measured signal element magnitudes of a received signal, as measured by the measurement unit, deviate from an expected signal element magnitude by at least a predetermined amount, and to identify the presence of an undershadow attack if one or more measured signal element magnitudes of a received signal, as measured by the measurement unit, deviate from an expected signal element magnitude by at least a predetermined amount.

For identifying an undershadow attack on a repeating signal S, the measurement unit may be configured to measure signal element magnitudes over several repetitions of the signal S, wherein the identification unit may be configured to compute average signal element magnitudes for each signal element over the several repetitions of the signal S and to identify any injection of signal elements based on a variation in the average signal element magnitudes, wherein the variation may be detected based on a statistical test of whether the average signal element magnitudes correspond to an assumed uniform distribution. If the signal is a non-repeating signal, only signal element magnitudes of the respective signal itself may be used, i.e. no averages.

Fig. 6 corresponds to Fig. 3 to the extent that the original signal transmitted by the transmitter Tx is again denoted by S, and the interfering signal transmitted by the attacker is again denoted by kI. In Fig. 6, the combined, i.e. superposition, signal S + kI of the two signals S and kI, which is received by the receiver Rx, is denoted by S2, i.e. S2=S+kI. Similarly as according to Fig. 3, the receiver Rx is, in the shown embodiment, configured to subtract a processed version of the signal S2 from the signal S2 itself, optionally if the presence of an attack, which is now an undershadow attack, has been identified.

The subsequent processing is, again like in Fig. 3, implemented by means of two separate signal processing chains, wherein the first of the signal processing chains actually processes the signal S2, the second of the two signal processing chains saves the signal S2, and the two signal processing chains are joined by means of a subtraction of the processed version of the signal S2 from the saved and otherwise non-processed version of the signal S2. However, according to the embodiment of Fig. 6, the processing applied along the first signal processing chain is different from the one illustrated in Fig. 3, although still the same regarding the first, demodulation/decoding step.

In the exemplary embodiment schematically illustrated by Fig. 6, the demodulated/decoded signal is referred to as $S3 = d^{(-1)}S + dI$. In this notation, d is a binary signal of the length of S such that d is 1 in the slots (e.g., time/frequency) affecting S (when I has a value different than 0) and otherwise 0. The signal $d^{(-1)}$ is d's inverse signal and thus, explicitly sets to 0 the values of S affected by I and to S the values not affected by I. The term "inverse" refers to a binary inverse, or complement, such that $d^{(-1)}$ is zero wherever d is one, and vice versa.

The signal elements of the signal S3, which may particularly be symbols, are being scaled depending on whether they have been identified as injected signal elements by the identification unit based, for instance, on a variation in the signal element magnitude, which may particularly be a symbol energy. In case injected signal elements are identified based on a signal element magnitude, it could also be just said that the signal elements are being scaled based on their signal element magnitude. In this way, the identification of injected signal elements may be considered as staying implicit.

The result of the scaling operation is denoted in Fig. 6 by $S4 = ad^{(-1)}S + bdI$. Hence, signal elements that have been identified to stem from the transmitter Tx are scaled by a predefined factor a, while signal elements that have been identified to stem from the attacker are scaled by a different predefined factor b. Preferably, the factors a and b are chosen such that $0 \leq a < 1$ and $b > k - 1$.

In order to obtain a and b, the signal S2 needs to be normalized by dividing the signal element magnitude of each of the signal elements of S2 by the signal element magnitude of the signal element with the lowest signal element magnitude. If each symbol in S2 can be received with two energy levels, as is the case when a binary thresholding of the received signal is carried out, then after normalization, the energy level of each symbol in S2 is either 1 or k. In the above description, and particularly in Fig. 6, it is assumed and shown a signal S2 that has already undergone binary thresholding and normalization. This assumption is justified, since the processing unit may be configured such that the processing of the received signal includes a thresholding of the signal elements into predefined signal element levels, the predefined signal element levels including at least an injection level indicative of an injected signal element magnitude and a non-injection level indicative of a non-injected signal element magnitude, wherein the signal elements are scaled depending on their signal element levels. The injection level can be chosen to include all reasonable signal element magnitudes that would be applied by attackers, and the non-injection level could be chosen to include all signal element magnitudes of a usual signal traffic in the network. The normalization could be carried out with respect to the lower, non-injection level, such that a factor k would arise that is indicative of a ratio between representative magnitudes of the injection and the non-injection level, respectively.

According to the embodiment of Fig. 6, prior to the second demodulation/decoding, the scaled version of S3, namely $S4 = ad^{(-1)}S + bdI$, is subtracted from S2, leading to $S5 = S+kI - (a\, d^{(-1)}\, S+bdI) = (1-ad^{(-1)})\, S + (k-bd)I$. Hence, a difference signal S5 is formed based on an unprocessed version S2 of the received signal and a processed version S4 of the received signal corresponding to the received signal as resulting from the thresholding and scaling. If S3 is scaled according to the condition $b > k - 1$, the signal elements at the injection level are scaled to above the level difference k-1, which is indicative of a difference in magnitude between the injection level and the non-injection level. This has the effect that, in the difference signal S5, the part from the original signal S will be higher in magnitude than the part from the injection at the positions in the signal element sequence where signal elements have been injected by the attacker. In this way, again similarly as in SIC, the original signal S can be retrieved in a second, and final, demodulation/decoding step. In Fig. 6, the result of this last demodulation/decoding, which corresponds to the original signal S, is denoted by S6, i.e. S6 = S in this case. Note that if a valid signal S6 is recovered, this (also) gives a detection indication, i.e., an indication of an ongoing attack. This exemplifies that the processing unit and the identification unit could actually be a single unit.

Additionally or alternatively to processing received signals as described above with respect to Fig. 3 and Fig. 6 in order to deal with attacks like overshadow and undershadow attacks, an avoidance strategy may be pursued. For this purpose, an apparatus in the form of a receiver Rx may be used again, particularly in combination with a corresponding apparatus, which may have the form of a transmitter Tx comprising a permutation unit for permuting signals to be transmitted. A particular way of avoiding attacks is to permute signals according to a permutation operation known to the transmitter and the receiver, but not to the attacker.

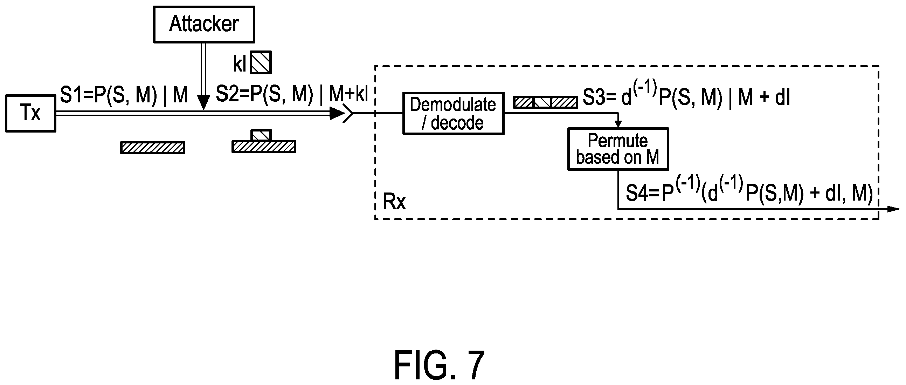

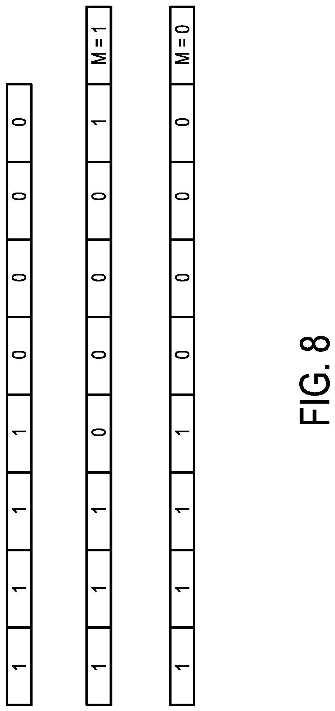

Fig. 7 and Fig. 8 illustrate schematically and exemplarily the case where the permutation operation is encoded into a permutation indicating signal part. The permutation indicating signal part corresponds in this case to a permutation mask M, which is at least one bit long, and determines the bit arrangement in a signal S. The permuted version of a signal S can be denoted P(S, M), i.e. in terms of a function P of the original signal S and the permutation mask M. In other words, according to the illustrated embodiment, the physical (e.g., time/frequency) arrangement of signal elements such as symbols/bits in a transmitted signal/message S is based on a mask M, wherein the signal S, in its permuted form, is transmitted in combination with the mask M.

Preferably, the mask M is appended to the end of a signal. In this case, as illustrated, the combined transmitted signal can be denoted as S 1=P(S, M)|M. In a variant, the mask M is included at the beginning of a signal, which can have the advantage that the receiver does not need to buffer the whole signal before processing it. In another variant, one or more masks M may be added to a signal, wherein each of the masks indicates a permutation that is only to be carried out on a respective part of the signal. For instance, if a signal containing N symbols is transmitted, then the first (set of, not necessarily consecutive) N/2 symbols may be subject to a permutation determined by a first mask and the second (set of, not necessarily consecutive) N/2 symbols may be subject to a second permutation determined by a second mask.

Moreover, it is preferred that the mask M is set at random, particularly for each signal separately. However, the mask M may also be set according to a predefined prescription accessible to the transmitter and the receiver, but not, at least not openly, to the attacker. A random mask M may also be preserved for a predetermined period of time, wherein only after the lapse of this period of time a new mask M is randomly chosen to be used.

When M is transmitted at the end of S1 and M is set at random, an attacker injecting a signal does not know how/when to modify the bits and the attacker has to guess how to undershadow the signal S. If M is 1 bit long, this leads to a 50% success ratio. If this is applied to multiple messages, the communication is unstable so that the receiver (Rx) drops the communication. Since the receiver might notice that 50% of messages decode in an unsuccessful manner the attacker will be forced to overshadow the whole signal, particularly including the mask M. These overshadow attacks can then be detected again, for instance, by analyzing a measure of the transmission power, i.e. an overall magnitude of received signals.

Fig. 7 illustrates how a transceiver Tx transmits a combined signal S1, wherein an attacker tries to inject a signal kI interfering with S1. This leads to a signal S2=P(S, M)|M + kI, where the interfering signal kI affects, e.g., certain symbols of S1.

Upon demodulation/decoding, a signal S3 = $d^{(-1)}$P(S, M)|M + dI is obtained by the receiver (Rx) from S2. S3 is then permuted, or permuted back, by the receiver according to the received mask M, which leads to a signal S4 = $P^{(-1)}$(S3', M), wherein S3' is equal to S3 up to the permutation mask at the end being removed, and $P^{(-1)}$ refers to the inverse function of P. S3' could also be written $d^{(-1)}$P(S,M) + dI, as done in Fig. 7.

S4 shows how the injected signal I is permuted, or permuted back, based on M. This turns the injected signal I into a plain interfering signal. This is to say, without knowing the permutation mask M, the attacker will no longer be able to inject bits at intended positions. Instead, the injected bits will be permuted, which will, like an ordinary jamming signal, destroy the meaning/correctness of the attacked signals, which may cause a disruption in signal reception. For instance, the receiver may be configured to carry out an integrity test, such as a cyclic redundancy check (CRC), for instance, on received signals, and to drop any signal not passing the integrity test. Due to the (back-)permutation, the signal S4 will not pass checks like the CRC.

The mask M might affect a signal S at different steps of the modulation/encoding process. For instance, it might refer to a permutation of the incoming bitstring corresponding to a signal at the physical layer, or to a permutation at a different layer in the communication stack. For instance, it might refer to a permutation in the mapping of orthogonal frequency-division multiplexing (OFDM) carriers or the quadrature amplitude modulation (QAM) symbols used in the transmission of S.

Fig. 8 shows at its top an exemplary message S comprising 8 bits. The message S is transformed by the transmitter by appending a mask bit M at the end of the message. In the illustrated example, when M=1, which corresponds to the middle case in Fig. 8, S1 = Rotate(S)|M, where Rotate() circularly rotates S. When M=0, which corresponds to the bottom case in Fig. 8, S1 = S|M, in this example. Hence, in this particular case,

$$P(S, M) = \begin{cases} \text{Rotate(S)}|M & \text{if } M = 1 \\ S|M & \text{if } M = 0 \end{cases} \qquad (1)$$

As mentioned further above, the permutation operation may not only be encoded into a permutation indicating signal part like the mask M, wherein the permuted signal is transmitted in combination with the permutation indicating signal part. Additionally or alternatively, the permutation operation may be encoded into a physical parameter of the respective signal and/or be defined depending on one or more communication parameters of the network. Furthermore, the permutation operation according to which a first signal to be transmitted is permuted may be encoded into a permutation indicating signal part that is transmitted in combination with a second permuted signal. Hence, for instance, when the transmitter Tx successively transmits a first signal S and thereafter a second signal S' to the receiver Rx, the mask M for S may be transmitted in combination with S' or vice versa.

In another embodiment, the transmitted signal might be transmitted in the default known frequency/time resources, but with a given frequency/time shift only known to transmitter and responder. For instance, if the resources allocated to transmit a signal are in a block of time resources between f0 and f1 and in a block of frequency resources t0 and t1, then the actual frequency resources used might be between f0+df and f1+df. Similarly, the actual time resources used might be between t0+dt and t1 +dt. In this case, dt and df might be securely exchanged or agreed between transmitter and receiver or securely assigned to transmitter and receiver. Similarly, dt and df might also be variable parameters, i.e., they might change every time a signal is exchanged between transmitter and receiver. Here, "securely" refers to confidentiality protected and/or integrity protected and/or replay protected, etc.

In a different embodiment related to the previous one, the frequency and/or time resources used for the exchange of a signal between transmitter and receiver (e.g., a block of frequency resources between f0 and f1 and in a block of frequency resources t0 and t1) might be securely exchanged or agreed between transmitter and receiver or securely assigned to transmitter and receiver.

Also the shifts of signal elements in time and/or frequency can be carried out by the permutation unit of the transmitter Tx and thereafter reversed by the receiver Rx, particularly the identification unit. These shifts could be regarded as a special case of permutations. Moreover, it is emphasized that any signal permutation measures are not necessarily constantly taken. Instead, it can be more efficient to configure the permutation unit such that it permutes signals to be transmitted only if an injected signal element has been identified in a received signal based on a signal element magnitude variation. A corresponding notice, or request, can be sent from the receiver Rx to the transmitter Tx.

With respect to Figs. 7 and 8, specific ways to permute signals have been described. In fact, all of them have been found to not only be applicable for avoiding attacks, but also for detecting attacks. Hence, besides taking variations in a signal element magnitude as a basis for identifying any injection I of signal elements into the received signal, the identification unit can be configured to take an inversion of a permutation operation applied to the received signal upon transmission as a basis therefor. The identification unit is then preferably configured to permute the received signal according to the inverted permutation operation, and to execute an integrity check on the permuted received signal. Whether the integrity check returns a positive or a negative result can then be taken as in indicator for any attacks launched against the received signal, particularly against selected signal elements in the sequence of signal elements of the signal without knowing that the signal has been permuted.

Although integrity checks can be used particularly in combination with a permutation of signals for detecting attacks, it can also be beneficial to carry them out in their own right. Irrespective of whether they are carried out in combination with signal permutations or not, the identification unit may be configured to execute an integrity check for a predetermined fraction of signals S in the network, wherein, for a given signal S to be transmitted, it is determined at random based on the predetermined fraction whether the integrity check is to be executed for the signal or not. Whether an integrity check is to be carried out for a given signal may be agreed upon by the receiver Rx and the transmitter Tx cooperatively. Then, for any signal S for which an integrity check is to be executed, an integrity indicating signal part may transmitted in combination with the signal S, wherein the identification unit may be configured to check an integrity of the signal S upon reception of the signal based on the integrity indicating signal part. Similarly as the permutation indication signal part exemplified by the mask M shown in Fig. 8, the integrity indicating signal part may be formed from additional signal elements, such as from bits or symbols included in the respective signal additionally to the bits or symbols encoding an actual message to be conveyed with the signal. In a particular example, the transmitted combination of the integrity indicating signal part and the signal S may be formed by including the integrity indicating signal part in the respective signal, wherein a lack of integrity may be concluded upon reception of the signal if it is determined that a magnitude of one or more signal elements of the integrity indicating signal part exceeds a predetermined threshold.

In Table 1, a schematic overview is given over functionalities achieved by realizing particular aspects of the embodiments disclosed herein (columns 1 to 4) and corresponding changes that might be necessary to existing networks for doing so (columns 5 to 7). It shall be understood that the entries "No" actually mean "Not necessarily". For instance, changes in the sequence of signal elements of the signals in a network are not necessary in order to be able to successfully implement the modified SIC, involving a scaling of signal element magnitudes, for signal correction/recovery, wherein the modified SIC may be carried out only upon identifying an attack. Still, however, changes in the signal element sequence may be implemented, too, just like for avoiding successful attacks.

Table 1: Schematic overview over particular aspects of the disclosed embodiments.

|  | Signal correction/re covery | Avoidance of successful attacks | Identification of attacks | Changes in signal element sequence | Changes in processing after reception | Changes in Core Network |
|---|---|---|---|---|---|---|
| 1) Scaling of signal element magnitudes | Yes | No | Yes | No | Yes | No |
| 2) Permuting signal elements | No | Yes | Yes | Yes | Yes | No |
| 3) Statistically identifying average element magnitude variations within signals | No | No | Yes | No | Yes | No |
| 4) Identifying element magnitude variations across signals | No | No | Yes | No | Yes | No |
| 5) Combination of 1) to 4) and 7) | Yes | Yes | Yes | Yes | Yes | No |
| 6) Reporting information from 5) to central network | Yes | Yes | Yes | Yes | Yes | Yes |
| 7) Integrity checking | No | No | Yes | Yes | Yes | No |

The embodiments disclosed herein have been found based on the realization that there has been no good solution in the prior art to 1) detect, 2) avoid or 3) deal with/recovering from overshadow and/or undershadow attacks. Attacks based on signal injection such as overshadow and undershadow attacks, i.e. attacks where an attacker injects a signal that over/undershadows a message sent by a transmitter so that the receiver decodes a modified message, are gaining importance in wireless communication systems such as LTE and 5G. Such injection attacks are also expected to be applicable to wireless sensing systems.

Detecting an attack may refer, for instance, to detecting that there is an ongoing attack, avoiding an attack may refer, for instance, to making it infeasible for an attacker to carry out the attack, and dealing with an attack may refer, for instance, to being able to receive the actual message, i.e. the original signal, in the event of an attack. According to the disclosed embodiments, 1) the presence of an attack can be detected by monitoring the traffic for persistent signals with higher signal magnitude (higher "received signal") across the whole signal (message) or certain elements (parts) of the signal, 2) the attacks can be prevented from happening (i.e., avoided) by including a mask in the signal that determines the arrangement of bits/symbols in the signal, wherein the mask may indicate a permutation, and/or 3) the desired signal can be recovered (thereby dealing with the attack) by performing Successive Interference Cancellation (SIC) on the received signal and additionally using the primary signal, i.e. the signal as received, to remove the attacker's signal, which may particularly be an overshadow/undershadow signal, by signal element-wise scaling. It has been found that any single one of these approaches 1) to 3) as well as any combination of them can improve the security of wired and wireless communication, particularly when subject to overshadow and/or undershadow attacks.

When the above embodiments are implemented on a receiver, the receiver may perform a test to determine whether the symbols or other signal elements in one or more received signals follow an expected distribution. The receiver may be capable of triggering an action based on a configured policy if the test is negative. The receiver may be configured to receive a configuration policy transmitted by a managing entity, e.g., the 5G core network or the radio access network. Moreover, the receiver may be configured to activate said policy upon policy reception or to activate the policy, or parts of it, e.g., certain rules, in the event a given situation is detected. The action may consist in applying SIC when decoding at least one of the received signals, wherein previously the decoded signal is scaled element-wise. The scaling factor used for scaling may depend, in an element-wise manner, on a normalized version of the received signal. The action triggered if the test is negative may consist in requesting a transmitter to permute transmitted signals based on a permutation indicator, which may be considered a mask. The mask may be appended to the transmitted signals, for instance. Alternatively, the action triggered if the test is negative may consist in applying a permutation indicator (mask) to permute any signals transmitted by the receiver itself when acting as a transmitter. Also the permutation indicator used by the receiver when acting as a transmitter may be appended to the signals, for instance. In a further alternative, the action triggered by a negative test may consist in rejecting a received signal, or in triggering an alarm.

Any countermeasures against attacks like the overshadow and/or under shadow attack may be taken either generally or only if the presence of such an attack is actually detected. Therefore, some of the above embodiments aim at detecting overshadow/undershadow attacks by monitoring changes in, for instance, the received SNR among different messages S. If an attacker injects a signal I or several signals I1,...,IM to modify (certain symbols of) S or several signals S1,... SM, the receiver will receive those messages affected by signal I (or I1,...,IM) with a higher energy level compared with those (signal elements, i.e., for instance, symbols in) signals S (or S1,...,SM) that are not affected by I. A specific approach to realize these embodiments therefore consists in: a) keeping track of the energy per symbol from multiple received signals S, and b) computing whether the energy levels of the signal symbols follows a uniform distribution, e.g., by means of a statistical test, e.g., a p-test. These embodiments might be executed by a receiving device if the receiving device performs the above check/test by itself.

It shall be understood that the techniques described with respect to any of the above embodiments might be combined. For instance, according to a first combination option, a) a receiver may be configured to measure the signal element magnitudes of received signals and, in order to detect the presence of attackers, test whether the measured signal element magnitudes within and/or across the received signals, or their temporal averages, satisfy an expected distribution. If an attacker is detected in this way, the receiver may be configured to apply Successive Interference Cancellation, particularly in its adapted form as described with respect to Fig. 6, in order to recover the desired signal that is being modified by an attacker. In addition, the receiver may, upon detecting an attacker, be configured to itself process received signals based on a predefined permutation operation so as to prevent the attacker from disrupting the signals exchanged with a transmitter, which may be a user equipment (UE), and/or to request the transmitter to make use of the same permutation operation upon transmitting the signals. According to a second exemplary combination option, a receiver may be configured to apply Successive Interference Cancellation, particularly in its adapted form as described with respect to Fig. 6, in order to recover the desired signal that is being modified by an attacker. If, then, one or more potential desired signals, i.e. one or more signals that seem to be uncorrupted, are detected, the receiver may test whether measured signal element magnitudes of the potential desired signal(s) within and/or across the received signal(s), or their temporal averages, satisfy an expected distribution, in order to confirm that the received signals are indeed uncorrupted or have in fact been subject to an attack. Additionally, the receiver may, upon detecting an attacker, be configured to itself process received signals based on a predefined permutation operation so as to prevent the attacker from disrupting the signals exchanged with a transmitter, which may be a user equipment (UE), and/or to request the transmitter to make use of the same permutation operation upon transmitting the signals.

In a particular embodiment, a system in the form of one or more UEs is presented, wherein the apparatus, acting as a receiver, is configured to gather information or statistics about the received signals S and sending them to a managing authority, e.g., a base station or a network function in the core network so that the system, can determine the presence of an attacker. Relevant information gathered might include any parameters, either raw or processed, involved in the embodiments disclosed herein, e.g., signal strength per symbol or the result of a statistical test related to the uniformity of the energy of the received signal symbols.

It is emphasized again that any of the above indicated actions that could be taken by a receiver upon obtaining a negative test result when testing whether signal elements in one or more received signals follow an expected distribution may also be taking independently of any test. In other words, the actions may alternatively be constantly taken. The test, which may correspond to the identification of any injected signal elements, might then only be optionally added. Choosing between taking the actions independently or in dependence on the test, i.e. independently or in dependence on whether an attack has been detected, may be regarded as a trade-off between security and efficiency. This required trade-off may be specified in a policy that may have been configured in the respective device.

Moreover, although the above embodiments have been described with a focus on overshadow and undershadow attacks, the embodiments can be applied equally well as a measure against any other attacks that function similarly as the overshadow and undershadow attack, particularly based on signal element injections exploiting the capture effect, e.g., in the context of wireless communications or sensing.

The above embodiments might find application in different types of multiple access such as orthogonal frequency-division multiplexing access (OFDMA) or rate-splitting multiple access (RSMA) systems.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. Moreover, it shall be understood that an expression involving the phrase "at least one of" and subsequently one or more elements or features, is to be understood in the inclusive-disjunctive sense. For instance, the expression "at least one of A, B, and C" is to be understood as meaning "A and/or B and/or C".

A single unit or device may fulfill the functions of several items recited in the claims. The mere fact that certain measures are recited in mutually different dependent claims does not indicate that a combination of these measures cannot be used to advantage.

Procedures like the measuring of signal element magnitudes, the identification of signal element injections, any further processing of received signals, the permuting of signals to be transmitted, et cetera, performed by one or several units or devices can be performed by any other number of units or devices. These procedures, can be implemented as program code means of a computer program and/or as dedicated hardware. However, these procedures, as well as any method following from any combination of them, are also disclosed herewith independently of how they are implemented.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to an apparatus for increasing an integrity of signals in a signaling network, each signal comprising a sequence of one or more signal elements. The apparatus comprises an identification unit configured to identify any injection of signal elements into a received signal based on at least one of a) a signal element magnitude variation and b) an inversion of a permutation operation applied to the received signal upon transmission. This allows for a reliable identification of injections of signal elements that are due to the capture effect. In particular, not only overshadow attacks, but also undershadow attacks or other injection attacks can be identified. By processing the received signals based on any identified injections of signal elements, the integrity of signals in the network can be increased.

**Claims**

1. An apparatus (Rx) for increasing an integrity of signals (S) in a signaling network, each signal (S) comprising a sequence of one or more signal elements, wherein the apparatus (Rx) comprises an identification unit configured to identify any injection (kI) of signal elements into a received signal based on at least one of a) a signal element magnitude variation and b) an inversion of a permutation operation (P) applied to the received signal upon transmission.

2. The apparatus (Rx) as defined in claim 1, further comprising a processing unit configured to process the received signal based on any identified injections of signal elements.

3. The apparatus (Rx) as defined in claim 2, wherein the processing of the received signal includes scaling its signal elements depending on whether they have been identified as injected signal elements.

4. The apparatus (Rx) as defined in claim 2 or 3, wherein the processing of the received signal includes a thresholding of the signal elements into predefined signal element levels, the predefined signal element levels including at least an injection level indicative of an injected signal element magnitude and a non-injection level indicative of a non-injected signal element magnitude, wherein the signal elements are scaled depending on their signal element levels.

5. The apparatus (Rx) as defined in 4, wherein the processing involves forming a difference signal (S5) based on an unprocessed version of the received signal and a processed version of the received signal corresponding to the received signal as resulting from the thresholding and scaling, wherein the scaling includes scaling the signal elements at the injection level to above a level difference, the level difference being indicative of a difference in magnitude between the injection level and the non-injection level.

6. The apparatus (Rx) as defined in any of the preceding claims, wherein, for identifying any injection (kI) of signal elements into the received signal based on a signal element magnitude variation, the identification unit is configured to detect the signal element magnitude variation in at least one of a) the sequence of signal elements of the received signal and b) a signal element sequence comprising a signal element of the received signal and one or more corresponding signal elements of previous repetitions of the received signal.

7. The apparatus (Rx) as defined in any of the preceding claims, wherein, for identifying any injection (kI) of signal elements into the received signal based on an inversion of a permutation operation (P) applied to the received signal upon transmission, the identification unit is configured to permute the received signal according to the inverted permutation operation, and to execute an integrity check on the permuted received signal.

8. The apparatus (Rx) as defined in any of the preceding claims, wherein the identification unit is configured to execute an integrity check for a predetermined fraction of signals (S) in the network, wherein, for a given signal (S) to be transmitted, it is determined at random based on the predetermined fraction whether the integrity check is to be executed for the signal or not.

9. The apparatus (Rx) as defined by claim 8, wherein, for any signal (S) for which an integrity check is to be executed, an integrity indicating signal part is transmitted in combination with the signal (S), wherein the identification unit is configured to check an integrity of the signal (S) upon reception of the signal based on the integrity indicating signal part.

10. The apparatus (Rx) as defined by claim 9, wherein the transmitted combination of the integrity indicating signal part and the signal (S) is formed by including the integrity indicating signal part in the respective signal, wherein a lack of integrity is concluded upon reception of the signal if it is determined that a magnitude of one or more signal elements of the integrity indicating signal part exceeds a predetermined threshold.

11. A system for increasing an integrity of signals (S) in a signaling network, each signal (S) comprising a sequence of one or more signal elements, wherein the system comprises:

a) the apparatus (Rx) as defined in any of claims 1 to 10 as a receiving device for the signals in the network, and/or
b) a transmitting device (Tx) for the signals (S) in the network, wherein the transmitting device comprises a permutation unit configured to permute signals (S) to be transmitted according to a permutation operation.

12. The system as defined in claim 11, wherein:

a) the permutation operation (P) is encoded into a permutation indicating signal part (M), and the permuted signal is transmitted in combination with the permutation indicating signal part,
b) the permutation operation (P) is encoded into a physical parameter of the respective signal (S),
c) the permutation operation (P) according to which a first signal to be transmitted is permuted is encoded into a permutation indicating signal part that is transmitted in combination with a second permuted signal, and/or
d) the permutation operation (P) is defined depending on one or more communication parameters of the network.

13. The system as defined in claim 11 or 12, wherein the permutation unit is configured to permute the signals (S) to be transmitted only if an injected signal element has been identified in a received signal based on a signal element magnitude variation.

14. A method for increasing an integrity of signals (S) in a signaling network, each signal (S) comprising a sequence of one or more signal elements, wherein the method includes identifying any injection (kI) of signal elements into a received signal based on at least one of a) a signal element magnitude variation and b) an inversion of a permutation operation (P) applied to the received signal upon transmission.

15. A computer program for increasing an integrity of signals (S) in a signaling network, wherein the program comprises instructions causing the apparatus (Rx) as defined in any of claims 1 to 12 to execute the method as defined in claim 14.

FIG. 1

FIG. 2

FIG. 3

FIG. 4

Rx

Measurement unit

Identification unit

Processing unit

# FIG. 5

Attacker

$kl$

Tx

$S$

$S2 = S + kl$

Demodulate / decode

$S3 = d^{(-1)}S + dl$

Modulate/ encode/ scale based on symbol energy

$S4 = a\, d^{(-1)}S + bdl$

$S + kl$

$-$

$+$

Demodulate / decode

$S6 = S$

$S5 = S + kl - (a\, d^{(-1)}S + bdl)$

Rx

FIG. 6

EP 4 340 424 A1

Attacker

kl

$S1 = P(S, M) \mid M$   $S2 = P(S, M) \mid M+kl$

Tx

Demodulate / decode   $S3 = d^{(-1)}P(S, M) \mid M + dl$

Permute based on M

Rx

$S4 = P^{(-1)}(d^{(-1)}P(S,M) + dl, M)$

## FIG. 7

| 1 | 1 | 1 | 1 | 0 | 0 | 0 | 0 |

| 1 | 1 | 1 | 0 | 0 | 0 | 0 | 1 | M = 1

| 1 | 1 | 1 | 1 | 0 | 0 | 0 | 0 | M = 0

FIG. 8

Europäisches
Patentamt
European
Patent Office
Office européen
des brevets

# EUROPEAN SEARCH REPORT

**Application Number**

EP 22 19 5563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SINGH MRIDULA ET AL: "V-Range: Enabling Secure Ranging in 5G Wireless Networks", PROCEEDINGS 2022 NETWORK AND DISTRIBUTED SYSTEM SECURITY SYMPOSIUM, 1 January 2022 (2022-01-01), XP055918743, Reston, VA DOI: 10.14722/ndss.2022.23151 ISBN: 978-1-891562-74-7 Retrieved from the Internet: URL:https://publications.cispa.saarland/3568/1/V_Range__Enabling_Secure_Ranging_in_5G_Wireless_Networks-3.pdf> | 1-4,6, 8-11,14, 15 | INV. H04W12/122 H04W12/106 H04L9/40 |
| A | * Sections I-V * | 5,7,12, 13 | |
| X | THOMAS MOON ET AL: "BlueFMCW: Random Frequency Hopping Radar for Mitigation of Interference and Spoofing", ARXIV.ORG, CORNELL UNIVERSITY LIBRARY, 201 OLIN LIBRARY CORNELL UNIVERSITY ITHACA, NY 14853, 3 August 2020 (2020-08-03), XP081730766, | 1,7,11, 12,14,15 | |
| A | * Section I-III * | 2-6, 8-10,13 | TECHNICAL FIELDS SEARCHED (IPC) H04L H04W |
| A | LUDANT NORBERT LUDANT N@NORTHEASTERN EDU ET AL: "SigUnder a stealthy 5G low power attack and defenses", PROCEEDINGS OF THE 2021 INTERNATIONAL CONFERENCE ON MANAGEMENT OF DATA, ACMPUB27, NEW YORK, NY, USA, 28 June 2021 (2021-06-28), pages 250-260, XP058755195, DOI: 10.1145/3448300.3467817 ISBN: 978-1-4503-8350-9 * Sections 1, 3 and 5 * | 1-15 | |

-/--

The present search report has been drawn up for all claims

| Place of search | Date of completion of the search | Examiner |
|---|---|---|
| Munich | 1 February 2023 | Olaechea, Javier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 22 19 5563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SATHAYE HARSHAD SATHAYE H@HUSKY NEU EDU ET AL: "SemperFi a spoofer eliminating standalone GPS receiver", PROCEEDINGS OF THE 13TH ACM CONFERENCE ON SECURITY AND PRIVACY IN WIRELESS AND MOBILE NETWORKS, ACMPUB27, NEW YORK, NY, USA, 8 July 2020 (2020-07-08), pages 353-355, XP058462485, DOI: 10.1145/3395351.3401703 ISBN: 978-1-4503-8006-5 * the whole document * ----- | 1-15 | |

TECHNICAL FIELDS
SEARCHED (IPC)

The present search report has been drawn up for all claims

| Place of search | Date of completion of the search | Examiner |
|---|---|---|
| Munich | 1 February 2023 | Olaechea, Javier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)